Europäisches Patentamt

European Patent Office

Office européen des brevets

(19)

(11) Veröffentlichungsnummer : **0 212 068**
**B1**

(12)

# EUROPÄISCHE PATENTSCHRIFT

(45) Veröffentlichungstag der Patentschrift :
19.07.89

(21) Anmeldenummer : 86106143.0

(22) Anmeldetag : 06.05.86

(51) Int. Cl.⁴ : **F 16 B 15/06**

(54) Nagel mit einem Kopf am einen und einer Spitze am anderen Ende des Schaftes.

(30) Priorität : 08.05.85 DE 3516479

(43) Veröffentlichungstag der Anmeldung :
04.03.87 Patentblatt 87/10

(45) Bekanntmachung des Hinweises auf die Patenterteilung : 19.07.89 Patentblatt 89/29

(84) Benannte Vertragsstaaten :
AT CH DE FR GB LI NL

(56) Entgegenhaltungen :
DE—A— 2 507 545
DE—A— 3 042 463
DE—B— 1 115 528
DE—B— 2 038 885
DE—U— 1 700 550
DE—U— 7 226 142
US—A— 2 649 831
US—A— 2 867 807
US—A— 4 219 980

(73) Patentinhaber : Rockenfeller KG Befestigungselemente
Ferndorfstrasse 80
D-5912 Hilchenbach 1 (DE)

(72) Erfinder : Rockenfeller, Gottfried, Ing.Grad.
An der Wilhelmsburg 11
D-5912 Hilchenbach (DE)
Erfinder : Rockenfeller, Wolfgang, Dipl.-Ök
Am Rauhen Berg 6
D-5912 Hilchenbach-Helberthausen (DE)

(74) Vertreter : Müller, Gerd et al
Patentanwälte HEMMERICH-MÜLLER-GROSSE-POLLMEIER-MEY Hammerstrasse 2
D-5900 Siegen 1 (DE)

EP 0 212 068 B1

## Beschreibung

Die Erfindung betrifft einen Nagel mit einem Kopf am einen und einer Spitze am anderen Ende des Schaftes und mit einer Vielzahl von im Anschluß an die Spitze, zumindest über einen Teil der Schaftlänge, am Schaftumfang ausgeformten Sägezahnprofil-Ringwulsten, deren steil geneigte Flanken dem Kopf und deren flach geneigte Flanken der Spitze zugewendet sind, wobei der Scheitelkreisdurchmesser der an die Schaftspitze anschließenden Sägezahnprofil-Ringwulste kleiner als der Scheitelkreisdurchmesser der dem Kopf näher gelegenen Sägezahnprofil-Ringwulste bemessen ist und sich dabei der den Scheitelkreisdurchmessern aller Sägezahnprofil-Ringwulste gemeinsame Hüllmantel vom Kopf zur Spitze hin konisch verjüngt, und wobei der Fußkreisdurchmesser der an die Schaftspitze anschließenden Sägezahnprofil-Ringwulste kleiner als der Fußkreisdurchmesser der dem Kopf näher gelegenen Sägezahnprofil-Ringwulste bemessen ist, und sich dabei der den Fußkreisdurchmessern aller Sägezahnprofil-Ringwulste gemeinsame Hüllmantel vom Kopf zur Spitze hin ebenfalls konisch verjüngt.

Ein Nagel dieser Gattung ist bereits bekannt durch DE-U- 17 00 550. Er hat den Vorteil, daß sich eine besonders gute Verankerung des Schaftes in dem ihn umgebenden Werkstoff sichergestellt und dadurch die Auszugsfestigkeit erhöht wird.

Die erhöhte Auszugsfestigkeit dieser Nägel beruht darauf, daß beim Eintreiben in die Bauteile deren Werkstoff in der unmittelbaren Umgebung des Nagelschaftes elastisch ausweicht und dann — nach Beendigung des Eintreibvorgangs — wieder in seine Ausgangslage zurückzukehren sucht, so daß er in jede einzelne Rille zwischen aufeinanderfolgenden Sägezahnprofil-Ringwulsten eindringt. Hieraus ergibt sich dann eine widerhakenartige Verklammerung zwischen den Sägezahnprofil-Ringwulsten und dem den Nagelschaft umgebenden Material.

Da durch die gattungsgemäße Ausgestaltung eines Nagelschaftes das Werkstoffgefüge im unmittelbaren Eintreibbereich des Nagelschaftes über die gesamte Schaftlänge nur solchen Beanspruchungen unterworfen wird, die seine Rückstell-Elastizität nicht beeinträchtigen, wird ein guter Verankerungseffekt der Sägezahnprofil-Ringwulste erreicht. Dies deshalb, weil nach dem Eintreiben der Nägel in die Bauteile in jedem Längenabschnitt des Schaftes noch Umgebungsmaterial vorhanden ist, dessen elastisches Rückstellvermögen voll erhalten geblieben ist und somit in die benachbarte Kerbe zwischen zwei unmittelbar aufeinanderfolgenden Sägezahnprofil-Ringwulsten unter Sicherstellung eines Widerhakeneffektes eindringt.

Für die Sicherstellung eines optimalen Widerhakeneffektes hat es sich jedoch als nachteilig erwiesen, daß die zwischen aufeinanderfolgenden Sägezahnprofil-Ringwulsten gelegenen Rillen des Nagelschaftes in allen Durchmesserbereichen des sich konisch verjüngenden Nagelschaftes gleiche Profiltiefe haben, so daß, bezogen auf den jeweiligen Schaftdurchmesser (Fußkreisdurchmesser und Scheitelkreisdurchmesser), die relative Profiltiefe der Umfangsrillen im Spitzenbereich des Nagelschaftes wesentlich größer ausfällt, als in dessen kopfnahen Bereichen. Die Folge hiervon ist, daß sich nach dem Eintreiben des Nagels der den Schaft umgebende Werkstoff aufgrund seiner Rückstell-Elastizität nur in den größeren Durchmesserbereichen so weit rückverformen kann, daß er die Rillen völlig ausfüllt. In den kleineren Durchmesserbereichen des Schaftes ist jedoch der umgebende Werkstoff in der Regel nicht in der Lage, die volle Tiefe der Rillen völlig auszufüllen. Die optimale Auszugssicherheit der Nägel wird daher nicht sicher erreicht.

Ziel der Erfindung ist es, diese Unzulänglichkeiten der gattungsgemäßen Nägel ohne technischen Mehraufwand auszuräumen. Deshalb ist der Erfindung die Aufgabe zugrunde gelegt, für Nägel der eingangs näher spezifizierten Art eine Ausbildung anzugeben, die es ermöglicht, daß das Werkstoffgefüge im unmittelbaren Eintreibbereich des Nagelschaftes über die gesamte Schaftlänge hinweg so in die Rillen zwischen aufeinanderfolgenden Sägezahnprofilringwulsten eindringt, daß diese völlig ausgefüllt werden und damit den optimalen Widerhaken- bzw. Verankerungseffekt sicherstellen.

Gelöst wird diese Aufgabe erfindungsgemäß nach dem Kennzeichen des Anspruchs 1 dadurch, daß der Konuswinkel des allen Scheitelkreisdurchmessern der Sägezahnprofil-Ringwulste zugeordneten Hüllmantels ein anderer ist als der Konuswinkel des allen Fußkreisdurchmessern dieser Sägezahnprofil-Ringwulste gemeinsamen Hüllmantels.

Herstellungstechnisch besonders wesentlich ist es nach der Erfindung, wenn nach Anspruch 2 der Teilungsabstand zwischen spitzennah am Schaft angeordneten Sägezahnprofil-Ringwulsten geringer als der Teilungsabstand zwischen kopfnah am Schaft angeordneten Sägezahnprofil-Ringwulsten bemessen wird. Durch eine solche Ausgestaltung ist es auf besonders einfache Art und Weise möglich, aus einem zunächst zylindrischen Stift einen Nagel mit konischen Hüllmänteln für die Grenzzonen ihrer Sägezahnprofil-Ringwulste zu walzen.

Bewährt hat es sich in einem solchen Falle, wenn gemäß Anspruch 3 der Teilungsabstand zwischen den kopfnahen Sägezahnprofil-Ringwulsten gleich dem Doppelten des Teilungsabstandes zwischen den spitzennahen Sägezahnprofil-Ringwulsten bemessen wird.

In jedem Falle ist es nach der Erfindung zu empfehlen, wenn sich gemäß Anspruch 4 die Sägezahnprofil-Ringwulste über mindestens die Hälfte der Länge des Schaftes erstrecken.

Während sich ein Nagel mit den vorstehend angegebenen Erfindungsmerkmalen hauptsächlich zum Eintreiben in Bauteile aus Holz und/oder auch Leder eignet, ist es für Nägel, die in härtere Werkstoffe, bspw. Beton oder dergleichen eingetrieben werden müssen von besonderer Wichtigkeit, daß entsprechend der im Anspruch 5 gegebenen technischen Lehre erfindungsgemäß in den die Sägezahnprofil-Ringwulste enthaltenden Schaftabschnitt noch steil schraubenförmig um dessen Umfang verlaufende Nuten eingeformt sind und dabei vorzugsweise mehrere dieser Nuten gleichmäßig in Umfangsrichtung des Schaftes verteilt liegen. Beim Eintreiben der Nägel in harte Werkstoffe ergibt sich hierdurch zwangsläufig ein Dreheffekt am Schraubenschaft, der das verankernde Eindringen der Sägezahnprofil-Ringwulste in den den Nagelschaft umgebenden Werkstoff beträchtlich intensiviert und dadurch den Widerhakeneffekt unterstützt.

Bei einem in dieser Weise weiter gestalteten Nagel wird eine gute Ausreißfestigkeit schon dann erzielt, wenn gemäß Anspruch 6 die Tiefe der schraubenförmigen Nuten etwa gleich der geringsten Tiefe der vorhandenen Sägezahnprofil-Ringwulste bemessen ist.

Optimale Wirksamkeit zeigen die Nägel jedoch dann, wenn entsprechend den Angaben des Anspruchs 7 erfindungsgemäß die Tiefe der schraubenförmigen Nuten in Längsrichtung des Schaftes jeweils entsprechend den unterschiedlichen Konuswinkeln der Hüllmäntel zu den Scheitelkreisdurchmessers und Fußkreisdurchmessern der Sägezahnprofil-Ringwulste differiert.

Durch die DE-B-20 38 885 sind zwar bereits Schraubennägel mit einem an der Spitze beginnenden, sich über mindestens die Hälfte der Länge des Schaftes erstreckenden und von eingeformten Nuten gebildeten, mehrgängigen Steilgewinde bekannt, dem eine gegen unbeabsichtigtes Lösen sicherndes Feingewinde überlagert ist. Während es jedoch bei diesen bekannten Schraubnägeln darauf ankommt, daß diese bei guter Sicherheit gegen unbeabsichtigtes Lösen zugleich auch die Möglichkeit eines beabsichtigten, willkürlichen Lösens bieten, können auch hier infolge des im wesentlichen auf der ganzen Länge gleichbleibenden Scheitelkreis- und Fußkreisdurchmessers des Feingewindes nur verhältnismäßig geringfügig erhöhte Ausreißkräfte aufgenommen werden.

Weitere Merkmale und Vorteile des Gegenstandes der Erfindung werden nachfolgend an in der Zeichnung dargestellten Ausführungsbeispielen erläutert. Es zeigen

Figur 1 die vergrößerte Seitenansicht eines Nagels,

Figur 2 ebenfalls in vergrößertem Maßstab und Seitenansicht eine gegenüber der Fig. 1 in vorteilhafter Weise fortentwickelte Ausbildungsform eines Nagels,

Figur 3 wiederum in vergrößerter Seitenansicht eine andere Fortentwicklung des in Fig. 1 dargestellten Nagels,

Figur 4 einen Querschnitt durch den Nagel nach Fig. 3 und

Figur 5 einen vergrößerten Teilausschnitt aus irgendeinem der Nägel nach den Fig. 1 bis 3 im Längsschnitt.

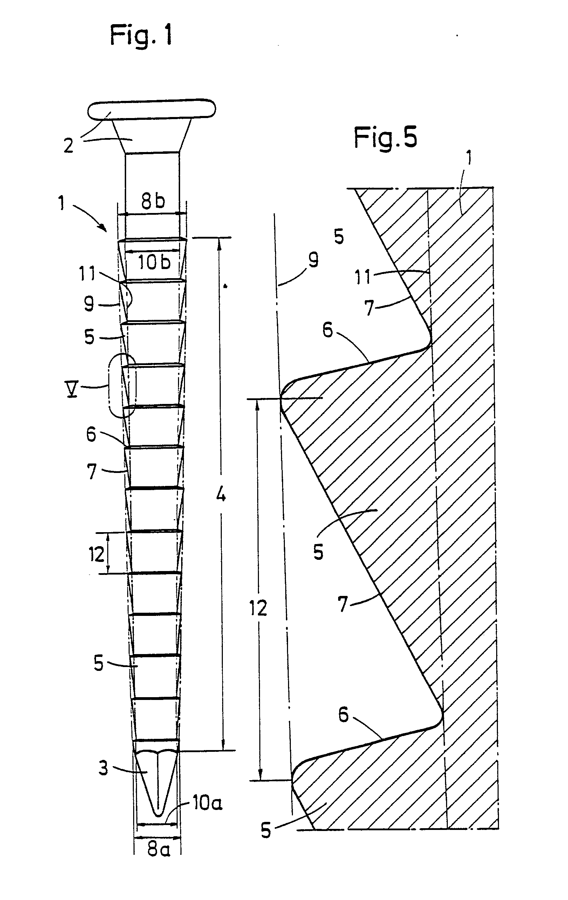

In den Fig. 1 bis 3 der Zeichnung ist jeweils ein Nagel dargestellt, der einen Schaft 1 aufweist. An das eine Ende dieses Schaftes 1 ist dabei ein verdickter Kopf 2 angeformt, während das andere Ende eine Spitze 3 hat.

Am Umfang des Schaftes 1 sind jeweils über einen Teil 4 seiner Länge Sägezahnprofil-Ringwulste 5 ausgeformt, deren steil geneigte Flanken 6 dem Kopf 2 und deren flach geneigte Flanken 7 der Spitze 3 zugewendet sind.

Der die Sägezahnprofil-Ringwulste 5 aufweisende Längenabschnitt 4 erstreckt sich mindestens über die Hälfte der Gesamtlänge des Schaftes 1 zwischen dem Kopf 2 und der Spitze 3 und ist vorteilhaft so bemessen, daß die Länge 4 sich zur Gesamtlänge des Schaftes 1 etwa wie 0,8 : 1 verhält.

Besonders wichtig ist dabei, daß der Scheitelkreisdurchmesser 8a der an die Spitze 3 des Schaftes 1 anschließenden Sägezahnprofil-Ringwulste 5 kleiner als der Scheitelkreisdurchmesser 8b der dem Kopf nähergelegenen Sägezahnprofil-Ringwulste 5 bemessen ist, dergestalt, daß der den Scheitelkreisdurchmessern sämtlicher Sägezahnprofil-Ringwulste 5 gemeinsame Hüllmantel 9 vom Kopf 2 zur Spitze 3 hin eine konische Verjüngung aufweist, wie das ohne weiteres den Fig. 1 bis 3 entnommen werden kann. Dabei hat der sämtlichen Sägezahnprofil-Ringwulsten 5 gemeinsame Hüllmantel 9 einen relativ kleinen Konuswinkel, d. h. der Unterschied zwischen den Scheitelkreisdurchmessern 8a und 8b ist relativ klein.

Auch der Fußkreisdurchmesser 10a der Sägezahnprofil-Ringwulste 5 ist im Anschluß an die Spitze 3 des Schaftes 1 kleiner bemessen als deren Fußkreisdurchmesser 10b in der Nähe des Kopfes 2, so daß deren gemeinsamer Hüllmantel 11 sich ebenfalls vom Kopf 2 zur Spitze 3 hin konisch verjüngt.

An den in den Fig. 1 bis 3 dargestellten Nägeln ist erkennbar, daß der Hüllmantel 9 aller Scheitelkreisdurchmesser einen Konuswinkel hat, welcher geringfügig größer ist als der Konuswinkel des Hüllmantels 11 aller Fußkreisdurchmesser. Hierdurch ergibt sich eine Ausbildung, bei der die steil geneigten Flanken 6 der Sägezahnprofil-Ringwulste 5 in Richtung vom Kopf 2 zur Spitze 3 hin eine sich vermindernde Breite aufweisen.

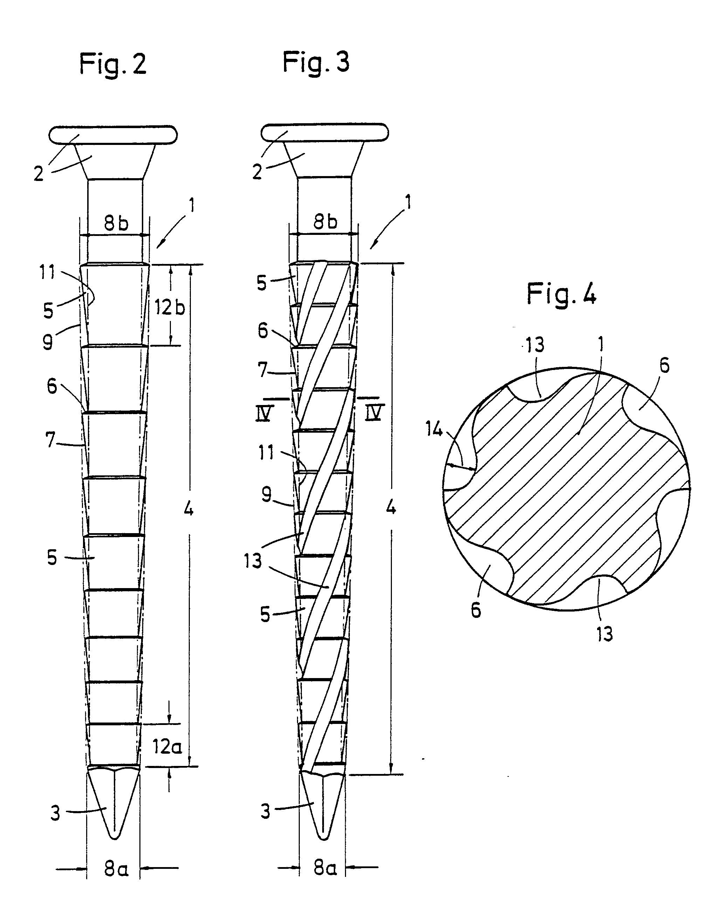

Bei den in den Fig. 1 und 3 der Zeichnung dargestellten Ausführungsformen eines Nagels haben sämtliche Sägezahnprofil-Ringwulste 5 einen übereinstimmenden Teilungsabstand 12 zueinander. Hingegen ist in Fig. 2 der Zeichnung ein Nagel gezeigt, bei dem der Teilungsabstand 12a der am Schaft 1 in der Nähe der Spitze 3 angeordneten Sägezahnprofil-Ringwulste 5 geringer bemessen ist als der Teilungsabstand 12b zwischen den dem Kopf 2 näherliegenden Sägezahnprofil-Ringwulst 5.

Bewährt hat sich dabei besonders eine Ausbildung, bei welcher der Teilungsabstand 12b zwischen den kopfnahen Sägezahnprofil-Ringwulsten 5 gleich dem Doppelten des Teilungsabstandes 12a zwischen den spitzennahen Sägezahnprofil-Ringwulsten 5 bemessen ist, wie das aus Fig. 2 hervorgeht. Es hat sich herausgestellt, daß die aus Fig. 2 der Zeichnung ersichtliche Ausführungsform eines Nagels sich besonders einfach herstellen läßt, weil als Ausgangsmaterial ohne weiteres ein zylindrischer Stift verwendet werden kann, in den dann die Sägezahnprofil-Ringwulste 5 eingewalzt werden. Im Gegensatz hierzu ist es zur Herstellung der Nägel nach den Fig. 1 und 3 nötig, als Ausgangsmaterial bereits konisch vorgeformte Stifte zu benutzen.

Wenn bspw. angenommen wird, daß die Sägezahnprofil-Ringwulste 5 in dem dem Kopf 2 näherliegenden Bereich des Schaftes 1 einen Scheitelkreisdurchmesser 8b von 5 mm haben, dann sollte der Scheitelkreisdurchmesser 8a der Sägezahnprofil-Ringwulste 5 in der Nähe der Spitze 3 des Schaftes 1 etwa 4,5 mm betragen.

Bei der in Fig. 2 der Zeichnung dargestellten Ausführungsform eines Nagels sollte bei den entsprechenden Durchmesser-Verhältnissen der Scheitelkreise 8a und 8b eine Ausbildung gewählt werden, bei der der dem Kopf 2 nächstliegende Sägezahnprofil-Ringwulst 5 vom vorhergehenden Sägezahnprofil-Ringwulst 5 einen Teilungsabstand 12b hat, der etwa 2 mm beträgt, während der Teilungsabstand 12a des Ringwulstes 5 im Anschluß an die Spitze 3 vom darauffolgenden Sägezahnprofil-Ringwulst einen Teilungsabstand von nur 1 mm aufweist. Die Teilungsabstände der dazwischen liegenden Sägezahnprofil-Ringwulste 5 vergrößern sich stufenweise, und zwar vorteilhafterweise derart, daß die Stufensprünge sich vom spitzennahen Bereich bis zum kopfnahen Bereich hin proportional zum Abstand von der Spitze 3 vergrößern. Demzufolge hat beim Nagel nach Fig. 3 jeder Sägezahnprofil-Ringwulst 5 eine andere Länge.

Die Profilform der einzelnen Sägezahnprofil-Ringwulste 5 ist besonders deutlich aus Fig. 5 der Zeichnung ersichtlich. Dabei ist auch zu sehen, daß die dem Kopf 2 zugewendete Flanke 6 jedes Sägezahnprofil-Ringwulstes 5 eine steilere Neigungslage aufweist als die der Spitze 3 zugewendete Flanke 7 desselben.

Erkennbar ist aus Fig. 5 aber auch, daß die den Scheitelkreisdurchmesser 8a bzw. 8b und den Hüllmantel 9 bestimmenden Kanten der einzelnen Sägezahnprofil-Ringwulste 5 eine Abrundung, zumindest aber eine Anfasung, aufweisen.

Während die in den Fig. 1 und 2 der Zeichnung dargestellten Nägel besonders zum Eintreiben in Holz, Leder oder ähnliche flexible Werkstoffe geeignet sind, ist in Fig. 3 ein Nagel dargestellt, der sich mit besonderem Vorteil zum Eintreiben in harte Werkstoffe, wie bspw. Beton oder dergleichen, eignet. Dieser Nagel unterscheidet sich von den Nägeln nach Fig. 1 und 2 im wesentlichen dadurch, daß in den die Sägezahnprofil-Ringwulste 5 enthaltenden Längenbereich 4 des Schaftes 1 mehrere steil schraubenförmig um den Schaftumfang verlaufende Nuten 13 eingeformt sind, die vorzugsweise einen Querschnitt haben, wie er aus Fig. 4 der Zeichnung ersichtlich ist.

Diese steil schraubenförmig um den Umfang des Schaftes 1 verlaufenden Nuten 13 sind in mehreren gleichmäßig in Umfangsrichtung verteilt angeordneten Gängen vorgesehen, wobei bspw. sechs Nuten 13 vorhanden sind, wie das deutlich aus Fig. 4 hervorgeht.

Die Tiefe 14 dieser Nuten 13 sollte dabei etwa gleich der geringsten Tiefe der vorhandenen Sägezahnprofil-Ringwulste 5 bemessen werden. Besonders bewährt hat es sich dabei, daß die Tiefe 14 dieser schraubenförmigen Nuten 13 in Längsrichtung jeweils entsprechend den unterschiedlichen Konuswinkeln der Hüllmäntel 9 und 11 zu den Scheitelkreisdurchmessern 8a, 8b und den Fußkreisdurchmessern 10, 10b differiert.

Nägel der aus den Fig. 3 und 4 ersichtlichen Ausbildung haben gegenüber den Nägeln der in den Fig. 1 und 2 dargestellten Ausbildungsform den besonderen Vorteil, daß sie sich während des durch Hammerschläge bewirkten Eintreibvorgangs, bedingt durch die eingeformten, schraubenförmigen Nuten 13, um ihre Längsachse verdrehen und auf diese Art und Weise eine schraubenartige Verankerung ihrer Sägezahnprofil-Ringwulste 5 im umgebenden Material bewirken.

Während der in Fig. 3 dargestellte Nagel in seiner Grundkonzeption der in Fig. 1 gezeigten Ausführung entspricht, liegt es ohne weiteres auf der Hand, daß der Nagel nach Fig. 3 auch eine Grundkonzeption entsprechend der Fig. 2 haben kann.

Er unterscheidet sich von den Nägeln nach den Fig. 1 und 2 im Grunde genommen also lediglich dadurch, daß er zusätzlich mit den steil schraubenförmig eingeformten Nuten 13 versehen ist.

Beim Nagel nach den Fig. 3 und 4 lassen sich die steil schraubenförmig verlaufenden Nuten 13 auf besonders vorteilhafte Art und Weise auch so in den Umfang des Schaftes 1 einformen, daß die Nutenkämme nahe der Spitze 3 desselben auf einem Kreis liegen, der einen geringfügig größeren Durchmesser hat als ein in der Nähe des Kopfes 2 um diese Nutenkämme herumgelegter Kreis.

Durch diese Ausgestaltungsmaßnahme wird der Verankerungseffekt des Nagels, insbesondere nach dessen Eintreiben in Holz, Leder oder ähnliches elastisch nachgiebiges Material besonders begünstigt.

**Patentansprüche**

1. Nagel mit einem Kopf (2) am einen und einer Spitze (3) am anderen Ende des Schaftes (1) und mit einer Vielzahl von im Anschluß an die Spitze (3) zumindest über einen Teil (4) der Schaftlänge, am Schaftumfang ausgeformten Sägezahnprofil-Ringwulsten (5), deren steil geneigte Flanken (6) dem Kopf (2) und deren flachgeneigte Flanken (7) der Spitze (3) zugewendet sind, wobei der Scheitelkreisdurchmesser (8a) der an die Schaftspitze (3) anschließenden Sägezahnprofil-Ringwulste (5) kleiner als der Scheitelkreisdurchmesser (8b) der dem Kopf (2) näher gelegenen Sägezahnprofil-Ringwulste (5) bemessen ist, und sich dabei der den Scheitelkreisdurchmessern (8a ... 8b) aller Sägezahnprofil-Ringwulste (5) gemeinsame Hüllmantel (9) vom Kopf (2) zur Spitze (3) hin konisch verjüngt, und wobei der Fußkreisdurchmesser (10a) der an die Schaftspitze (3) anschließenden Sägezahnprofil-Ringwulste (5) kleiner als der Fußkreisdurchmesser (10b) der dem Kopf (2) nähergelegenen Sägezahnprofil-Ringwulste (5) bemessen ist, und sich dabei der den Fußkreisdurchmessern (10a ... 10b) aller Sägezahnprofil-Ringwulste (5) gemeinsame. Hüllmantel (11) vom Kopf (2) zur Spitze (3) hin konisch verjüngt, dadurch gekennzeichnet, daß der Konuswinkel des allen Scheitelkreisdurchmessern (8a ... 8b) der Sägezahnprofil-Ringwulste (5) zugeordneten Hüllmantels (9) ein anderer ist als der Konuswinkel des allen Fußkreisdurchmessern (10a ... 10b) dieser Sägezahnprofil-Ringwulste (5) gemeinsamen Hüllmantels (11).

2. Nagel nach Anspruch 1, dadurch gekennzeichnet, daß der Teilungsabstand (12a) zwischen spitzennah am Schaft (1) angeordneten Sägezahnprofil-Ringwulsten (5) geringer als der Teilungsabstand (12b) zwischen kopfnah am Schaft (1) angeordneten Sägezahnprofil-Ringwulsten (5) bemessen ist.

3. Nagel nach einem der Ansprüche 1 und 2, dadurch gekennzeichnet, daß der Teilungsabstand (12b) zwischen den kopfnahen Sägezahnprofil-Ringwulsten (5) gleich dem Doppelten des Teilungsabstandes (12a) zwischen den spitzennahen Sägezahnprofil-Ringwulsten (5) bemessen ist.

4. Nagel nach einem der Ansprüche 1 bis 3, dadurch gekennzeichnet, daß sich die Sägezahnprofil-Ringwulste (5) über mindestens die Hälfte der Länge des Schaftes (3) erstrecken.

5. Nagel nach einem der Ansprüche 1 bis 4, dadurch gekennzeichnet, daß in den die Sägezahnprofil-Ringwulste (5) enthaltenden Schaftabschnitt (4) steil schraubenförmig um dessen Umfang verlaufende Nuten (13) eingeformt sind und dabei vorzugsweise mehrere dieser Nuten (13) gleichmäßig in Umfangsrichtung des Schaftes (1) verteilt liegen.

6. Nagel nach Anspruch 5, dadurch gekennzeichnet, daß die Tiefe (14) der schraubenförmigen Nuten (13) etwa gleich der geringsten Tiefe der vorhandenen Sägezahnprofil-Ringwulste bemessen ist.

7. Nagel nach einem der Ansprüche 5 und 6, dadurch gekennzeichnet, daß die Tiefe (14) der schraubenförmigen Nuten (13) in Längsrichtung des Schaftes (1) jeweils entsprechend den unterschiedlichen Konuswinkeln der Hüllmäntel (9 und 11) zu den Scheitelkreisdurchmessern (8a ... 8b) und Fußkreisdurchmessern (10a ... 10b) differiert.

8. Nagel nach einem der Ansprüche 5 bis 7, dadurch gekennzeichnet, daß der Schaft (1) im Bereich der steil schraubenförmig verlaufenden Nuten (13) am spitzennahen Ende einen geringfügig größeren Durchmesser aufweist, als nahe dem Kopf (2).

## Claims

1. Nail with a head (2) at one end and a point (3) at the other end of the shaft (1) and with a plurality of annular beads (5) of saw-tooth profile formed on the shaft circumference, starting at the tip (3) and extending over at least a part (4) of the shaft length, the steeply sloped flanks (6) of the beads facing the head (2) and their shallow-sloped flanks (7) facing the tip (3), the crest diameter (8a) of the saw-tooth annular beads (5) following the shaft tip (3) being smaller in dimensions than the crest diameter (8b) of the saw-tooth annular beads (5) disposed closer to the head (2) and the envelope surface (9) common to the crest diameters (8a ... 8b) of all annular beads (5) of saw-tooth profile being reduced conically from the head (2) to the tip (3), the root diameter (10a) of those annular beads of saw-tooth profile adjoining the shaft tip (3) being smaller than the root diameter (10b) of the saw-tooth annular beads (5) situated closer to the head (2), and the envelope surface (11) common to the base circle diameters (10a ... 10b) of all saw-tooth profile annular beads (5) likewise being tapered from the head (2) to the tip (3), characterised in that the cone angle of the envelope surface (9) associated with all crest diameters (8a ... 8b) of the annular beads (5) of saw-tooth profile is different from that of the cone angle of the envelope surface (11) common to all base circle diameters (10a ... 10b) of these saw-tooth profile annular beads (5).

2. Nail according to claim 1, characterised in that the spacing (12a) between saw-tooth profile annular beads (5) arranged near the tip on the shaft (1) is smaller than the spacing (12b) between annular beads (5) of saw-tooth profile arranged near the head on the shaft (1).

3. Nail according to one of the claims 1 and 2, characterised in that the spacing distance (12b) between the annular beads (5) of saw-tooth profile near the head is equal to double the spacing between the saw-tooth annular beads (5) near the tip.

4. Nail according to one of the claims 1 to 3, characterised in that the saw-tooth profile annular beads (5) are extended over at least half of the length of the shaft (3).

5. Nail according to one of the claims 1 to 4, characterised in that the shaft section (4) containing the saw-tooth profile annular beads (5) has formed therein grooves (13) extending steeply and helically around the circumference thereof and advantageously several of these grooves (13) are distributed uniformly in the circumferential direction of the shaft (1).

6. Nail according to claim 5, characterised in that the depth (14) of the helical grooves (13) is approximately equal to the shallowest depth of the existing annular beads of saw-tooth profile.

7. Nail according to one of claims 5 and 6, characterised in that the depth (14) of the helical

grooves (13), in the length direction of the shaft (1), differs according to the different cone angles of the walls (9 and 11) to the crest circle diameters (8a ... 8b) and base circle diameters (10a ... 10b).

8. Nail according to one of the claims 5 to 7, characterised in that the shaft (1), in the region of the steep helically extending grooves (13), has a slightly larger diameter at the end near the tip than near the head (2).

**Revendications**

1. Clou comportant une tête (2) disposée à une extrémité de la tige (1) et une pointe (3) disposée à l'autre extrémité de ladite tige (1) ainsi qu'une pluralité de renflements (5) annulaires présentant une section en dent de scie, répartis sur au moins une partie (4) de la longueur de la tige, à partir de la pointe (3) et formés sur la périphérie de la tige, les flancs raides (6) desdits renflements annulaires étant orientés vers la tête (2) et les flancs moins raides (7) étant orientés vers la pointe (3), le diamètre du cercle de sommet (8a) des renflements annulaires en dent de scie (5) adjacents à la pointe (3) de la tige étant plus petit que le diamètre du cercle de sommet (8b) des renflements annulaires en dent de scie agencés à proximité de la tête (2) et l'enveloppe (9) commune aux cercles de sommet (8a ... 8b) de tous les renflements annulaires en dent de scie (5) se rétrécissant de manière conique en partant de la tête (2) vers la pointe (3), le diamètre du cercle de base (10a) des renflements annulaires en dent de scie (5) agencés à proximité de la pointe (3) de la tige étant plus petit que le diamètre du cercle de base (10b) des renflements annulaires en dent de scie (5) agencés à proximité de la tête (2) et l'enveloppe (11) commune aux cercles de base (10a ... 10b) de tous les renflements annulaires en dent de scie (5) se rétrécissant de manière conique en partant de la tête (2) vers la pointe (3), caractérisé en ce que l'angle de conicité de l'enveloppe (9) associée à tous les diamètres de cercles de sommet (8a ... 8b) des renflements annulaires en dent de scie (5) est différent de celui de l'enveloppe (11) commune à tous les diamètres de cercle de base (10a ... 10b) de ces renflements en dent de scie (5).

2. Clou selon la revendication 1 caractérisé en ce que l'écart (12a) entre renflements annulaires (5) en dent de scie agencés à proximité de la pointe de la tige (1) est plus petit que l'écart (12b) entre renflements annulaires (5) en dent de scie agencés à proximité de la tête de la tige (1).

3. Clou selon l'une des revendications 1 ou 2 caractérisé en ce que l'écart (12b) entre les renflements annulaires (5) en dent de scie proches de la tête équivaut au double de l'écart (12a) entre les renflements annulaires (5) en dent de scie proches de la pointe.

4. Clou selon l'une quelconque des revendications 1 à 3 caractérisé en ce que les renflements annulaires (5) en dent de scie s'étendent sur au moins la moitié de la longueur de la tige (3).

5. Clou selon l'une quelconque des revendications 1 à 4 caractérisé en ce que le segment de tige (4) comportant les renflements annulaires (5) en dent de scie est muni de rainures (13) s'étendant sur sa périphérie selon une courbe hélicoïdale raide et en ce que, de préférence, plusieurs rainures (13) sont réparties uniformément sur la périphérie de la tige (1).

6. Clou selon la revendication 5 caractérisé en ce que la profondeur (14) des rainures hélicoïdales (13) correspond approximativement à la plus faible profondeur des renflements annulaires en dent de scie en présence.

7. Clou selon l'une quelconque des revendications 5 et 6 caractérisé en ce que la profondeur (14) des rainures hélicoïdales (13) varie, dans le sens longitudinal de la tige (1), en correspondance avec les divers angles de conicité des enveloppes (9 et 11) des cercles de sommet (8a ... 8b) et des cercles de base (10a ... 10b).

8. Clou selon l'une quelconque des revendications 5 à 7, caractérisé en ce que la tige (1) présente dans la zone des rainures (13) s'étendant selon une courbe hélicoïdale raide, à l'extrémité proche de la pointe, un diamètre légèrement plus grand qu'à proximité de la tête (2).

# Fig. 1

# Fig.5

Fig. 2

Fig. 3

Fig. 4